# EUROPEAN PATENT APPLICATION

(11) **EP 2 012 534 A1**
(43) Date of publication of application: **07.01.2009**
(21) Application number: 08153639.3
(22) Date of filing: 28.03.2008
(51) Int. Cl.: H04N 5/76, H04N 7/173

(54) **Broadcast scheduling method and broadcast receiving apparatus using the same**

(30) Priority: 06.07.2007 KR 20070068215
(71) Applicant: Samsung Electronics Co., Ltd, Suwon-si, Gyeonggi-do 442-742 (KR)
(72) Inventor: Han, Kum-yon, Gyeonggi-do (KR)
(74) Representative: Clark, David James

(57) **Abstract**

A broadcast scheduling method and a broadcast receiving apparatus using the method are provided. The broadcast scheduling method includes scheduling recording or viewing of a broadcast program based on schedule information, which is received from an external apparatus, to which broadcast information is transmitted, and is set by a user. Accordingly, the user may set scheduling for the desired broadcast program through the external apparatus, and thus it is possible to set scheduling for the broadcast program based on broadcast information stored in the broadcast receiving apparatus even if there is no broadcast receiving apparatus.

## Description

### BACKGROUND OF THE INVENTION

### 1. Field of the Invention

Apparatuses and methods consistent with the present invention relate to scheduling a broadcast using a broadcast receiving apparatus, and for example more particularly, to scheduling recording or viewing of a broadcast program desired by a user using the broadcast receiving apparatus.

### 2. Description of the Related Art

Recently, broadcast receiving apparatuses, such as televisions (TVs), have been provided with various additional functions along with the function of providing users with broadcast programs.

One of the additional functions provided by TVs is a function of scheduling and recording broadcast programs. This scheduled recording function enables users to view broadcast programs at a convenient time if they cannot view the desired broadcast programs at the time that the broadcast programs are received.

In order to execute the scheduled recording function, a user typically needs to set details regarding the scheduled recording using a remote controller of a TV. Accordingly, if the user is unavailable to view the desired broadcast program at the scheduled broadcast time of the broadcast program, the user is able to set the system to record the broadcast program. For example, the user can set the scheduled, recording function prior to leaving home, and view the recorded program at a delayed or convenient time when he returns home. Currently, if the user does not set the scheduled recording in advance, the user has no way to set the scheduled recording function. In this case, since the user is away and is unable to set the scheduled recording, the scheduled recording function of the TV in this scenario is rendered ineffective or useless.

### SUMMARY OF THE INVENTION

Exemplary embodiments of the present invention aim to address the above disadvantages and/or other disadvantages not described above.

As will be explained in detail below, example embodiments of the present invention provide a broadcast scheduling method and a broadcast receiving apparatus using the method in which the broadcast receiving apparatus schedules recording or viewing of a broadcast program selected by a user based on broadcast information provided from the broadcast receiving apparatus through an external apparatus.

According to an aspect of the present invention, there is provided a broadcast scheduling method comprising transmitting broadcast information to an external apparatus; receiving schedule information set by a user from the external apparatus; and scheduling recording or viewing of a broadcast program based on the schedule information.

The scheduling may comprise scheduling recording or viewing of a broadcast program contained in the schedule information.

The broadcast information may comprise information received from one of a broadcast provider and a broadcast information provider and stored by the broadcast receiving apparatus.

The broadcast information may comprise information received from one of a broadcast provider and a broadcast information provider, edited according to user edit instructions and stored by the broadcast receiving apparatus.

The broadcast information may comprise information received together with the broadcast program through the same medium to which the broadcast is transferred, and then stored by the broadcast receiving apparatus.

The medium to which the broadcast is transferred may be one of radio, a cable, a network, an Internet and a satellite.

The broadcast information may comprise information received through a medium, which differs from the medium to which the broadcast is transferred, and stored by the broadcast receiving apparatus.

The scheduling may comprise performing at least one of scheduled viewing and scheduled recording of the broadcast program.

The transmitting may comprise transmitting the broadcast information to the external apparatus via one network selected from among an Internet, a public switched telephone network (PSTN), a local area network (LAN), a personal area network (PAN), a wireless network. The receiving may comprise receiving the schedule information from the external apparatus via the selected network.

The external apparatus may be one of a personal computer (PC), a mobile phone and a network connection apparatus.

The broadcast receiving apparatus and the external apparatus may be in the possession of or belong to the same user.

The broadcast receiving apparatus and the external apparatus may be connected via the Internet, enabling mutual communication. The broadcast receiving apparatus may function as a web server for the external apparatus.

According to another aspect of the present invention, there is provided a broadcast receiving apparatus comprising a communication interface which is communicably connected to an external apparatus; and a controller which transmits broadcast information to the external apparatus through the communication interface, receives schedule information set by a user from the external apparatus through the communication interface, and schedules recording or viewing of a broadcast program based on the user's set schedule information.

The controller may schedule recording or viewing of a broadcast program contained in the schedule information.

The broadcast receiving apparatus may further comprise a storage unit which stores broadcast information received from one of a broadcast provider and a broadcast information provider. The controller may transmit the broadcast information stored in the storage unit to the external apparatus through the communication interface.

The broadcast receiving apparatus may further comprise a storage unit which stores the broadcast information. The controller may edit broadcast information received from one of a broadcast provider and a broadcast information provider according to user edit instructions, may store the edited broadcast information in the storage unit, and may transmit the stored broadcast information to the external apparatus through the communication interface.

The broadcast information may comprise information received together with a broadcast through the same medium to which the broadcast is transferred, and then stored.

The medium to which the broadcast is transferred may be one of radio, a cable, a network, an Internet and a satellite.

The broadcast information may comprise information received through a medium, which differs from the medium to which the broadcast is transferred, and stored by the broadcast receiving apparatus.

The controller may perform at least one of scheduled viewing and scheduled recording of the broadcast program.

The communication interface may be connected to the external apparatus via one network selected from among an Internet, a PSTN, an LAN, a PAN and a wireless network, enabling communication with the external apparatus.

The external apparatus may be one of a PC, a mobile phone and a network connection apparatus.

The broadcast receiving apparatus and the external apparatus may be in the possession of or belong to the same user.

The broadcast receiving apparatus and the external apparatus may be connected via the Internet, enabling mutual communication. The broadcast receiving apparatus may function as a web server for the external apparatus.

According to another aspect of the present invention, there is provided a broadcast scheduling method comprising receiving broadcast information from a broadcast receiving apparatus; and transmitting schedule information set by a user to the broadcast receiving apparatus based on the broadcast information.

The schedule information may comprise information regarding a broadcast program selected by the user.

According to another aspect of the present invention, there is provided a terminal device comprising a communication interface which is communicably connected to a broadcast receiving apparatus; and a processor which receives broadcast information from the broadcast receiving apparatus through the communication interface and transmits schedule information set by a user to the broadcast receiving apparatus through the communication interface based on the broadcast information.

The schedule information may comprise information regarding a broadcast program selected by the user.

According to another aspect of the present invention, there is provided a broadcast scheduling method comprising receiving broadcast information from a broadcast receiving apparatus; and transmitting schedule information containing information regarding a broadcast program selected based on the broadcast information to the broadcast receiving apparatus in order to schedule recording or viewing of the broadcast program.

The broadcast information may comprise information received from one of a broadcast provider and a broadcast information provider and stored by the broadcast receiving apparatus.

The receiving may comprise receiving the broadcast information from the broadcast receiving apparatus via one network selected from among an Internet, a PSTN, an LAN, a PAN, and a wireless network. The transmitting may comprise transmitting the schedule information to the broadcast receiving apparatus via the selected network.

According to another aspect of the present invention, there is provided a terminal device comprising a communication interface which is communicably connected to a broadcast receiving apparatus; and a processor which receives broadcast information from the broadcast receiving apparatus through the communication interface and transmits schedule information containing information regarding a broadcast program selected based on the broadcast information to the broadcast receiving apparatus through the communication interface in order to schedule recording or viewing of the broadcast program.

The broadcast information may comprise information received from one of a broadcast provider and a broadcast information provider and stored by the broadcast receiving apparatus.

The communication interface may be connected to the broadcast receiving apparatus via one network selected from among an Internet, a PSTN, an LAN, a PAN and a wireless network, enabling communication with the broadcast receiving apparatus.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a diagram showing an example of a broadcast scheduling system to which the present invention is applicable;
FIG. 2 is a detailed block diagram showing a DTV shown in FIG. 1;
FIG. 3 is a detailed block diagram showing a PC shown in FIG. 1;
FIG. 4 is a diagram explaining a broadcast scheduling method according to an exemplary embodiment of the present invention;
FIG. 5 is a block diagram showing a broadcast receiving apparatus according to another exemplary embodiment of the present invention;
FIG. 6 is a diagram explaining a broadcast scheduling method according to another exemplary embodiment of the present invention;
FIG. 7 is a block diagram showing a terminal device according to another exemplary embodiment of the present invention; and
FIG. 8 is a diagram explaining a broadcast scheduling method according to another exemplary embodiment of the present invention.

### DETAILED DESCRIPTION OF EXEMPLARY EMBODIMENTS

Certain exemplary embodiments of the present invention will now be described in greater detail with reference to the accompanying drawings.

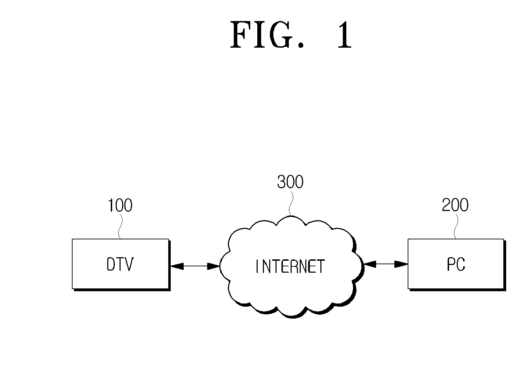

FIG. 1 is a diagram showing an example of a broadcast scheduling system to which the present invention is applicable. The broadcast scheduling system of FIG. 1 is configured by connecting a DTV 100 to a PC 200 via the Internet 300 to achieve mutual communication.

The DTV 100 is used as a broadcast receiving apparatus which receives a broadcast program and provides a user with the received broadcast program. The DTV 100 also provides a function to schedule and record broadcast programs. A broadcast program schedule may comprise a viewing schedule and a recording schedule. The viewing schedule enables a user to directly view a scheduled broadcast program by turning on the DTV 100 at the time when the broadcast of the scheduled broadcast program begins and by tuning to a channel of the scheduled broadcast program. Alternatively, if the DTV 100 has already been turned on, only tuning to the channel is performed. The DTV 100 stores information regarding the scheduled broadcast program in a built-in storage medium or an external recording device connected to the DTV, so the user may view a broadcast of the scheduled broadcast program later.

The PC 200 is communicably connected to the DTV 100 via the Internet 300, and may be located far away from the DTV 100. For example, the DTV 100 may be located in a user's home, while the PC 200 may be located in the user's office.

The PC 200 receives electronic program guide (EPG) information from the DTV 100 via the Internet 300. The user may select a broadcast program to schedule for recoding or viewing, while referring to the EPG information on the PC 200.

If the PC 200 transmits information regarding the broadcast program selected by the user to the DTV 100, the DTV 100 may schedule recording or viewing of the broadcast program.

Since the DTV 100 is arranged to provide broadcast information to the PC 200, which is connected to the DTV 100 via the Internet 300, through a webpage, the DTV 100 may function as a web server. The PC 200 suitably requests the broadcast information using the webpage of the DTV 100, which is connected to the PC 200 via the Internet 300, and accordingly the PC 200 may function as a web client.

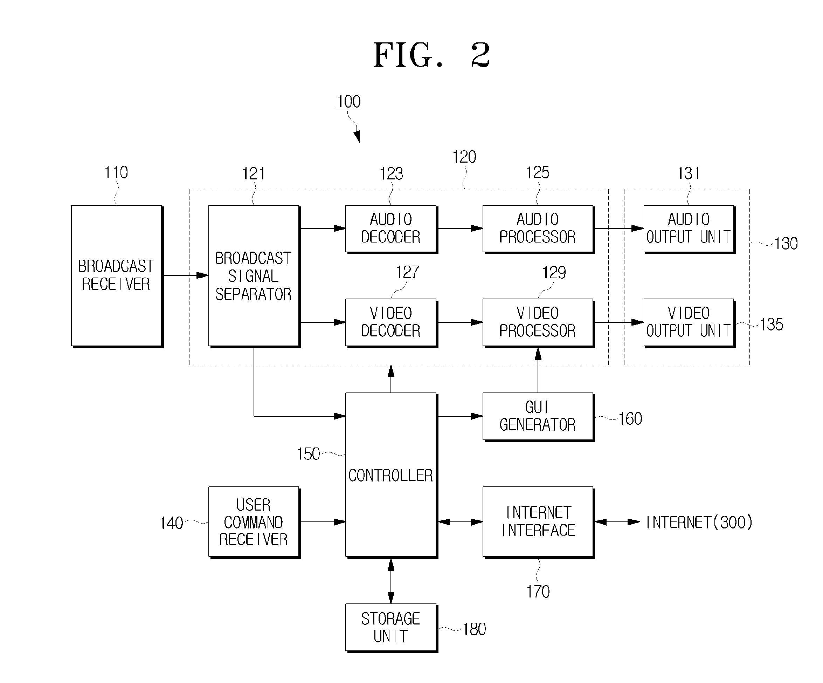

Hereinafter, the DTV 100 of FIG. 1 will be described in detail with reference to FIG. 2. FIG. 2 is a detailed block diagram showing the DTV 100 shown in FIG. 1. In FIG. 2, the DTV 100 comprises a broadcast receiver 110, a broadcast processor 120, a broadcast output unit 130, a user command receiver 140, a controller 150, a graphical user interface (GUI) generator 160, an Internet interface unit 170 and a storage unit 180.

The broadcast signal receiver 110 tunes to one of broadcasts received wirelessly through radio, and demodulates the tuned broadcast.

The broadcast processor 120 performs signal processing with respect to the broadcast signal output from the broadcast signal receiver 110. The broadcast processor 120 functioning as described above comprises a broadcast signal separator 121, an audio decoder 123, an audio processor 125, a video decoder 127 and a video processor 129.

The broadcast signal separator 121 separates the broadcast signal output from the broadcast signal receiver 110 into a video signal, an audio signal and additional data, and outputs the separated signals and data. The audio signal and the video signal separated from the broadcast signal are transferred to the audio decoder 123 and the video decoder 127, respectively, to be used in providing a digital broadcast program.

The additional data separated from the broadcast signal is transferred to the controller 150. The additional data comprises the EPG information. The EPG information includes information regarding broadcast programs to be scheduled for broadcasting, for example, the title, broadcasting time, genre, plot, director, main actors or characters of the broadcast programs.

The audio decoder 123 decodes the audio signal output from the broadcast signal separator 121. Accordingly, the audio decoder 123 may output the decoded audio signal.

The audio processor 125 converts the decoded audio signal output from the audio decoder 123 into an audio signal of a format suitable for being played through a speaker.

The video decoder 127 decodes the video signal output from the broadcast signal separator 121, so that the decoded video signal can be output.

The video processor 129 converts the decoded video signal output from the video decoder 127 into a video signal of a format suitable for displaying on the DTV 100. In order to achieve a format suitable for displaying video, the video processor 129 performs color signal processing and scaling with respect to the decoded video signal.

The GUI generator 160 generates a GUI to be displayed on the display. The GUI generated by the GUI generator 160 is transferred to the video processor 129, and is then added to video to be displayed on the display. This operation is referred to as on-screen display (OSD) processing.

The broadcast output unit 130 outputs video and audio corresponding to the video signal and the audio signal output from the broadcast processor 120, and provides a user with the video and audio. The broadcast output unit 130 comprises an audio output unit 131 and a video output unit 135.

The audio output unit 131 outputs the audio signal transmitted from the audio processor 125 through the speaker, or outputs the audio signal to an output device (for example, an external TV) which is connected through an external output terminal.

The video output unit 135 outputs the video signal transmitted from the video processor 129 through the display, or outputs the video signal to an output display device (for example, an external TV) which is connected through an external output terminal.

The Internet interface unit 170 is connected to the PC 200 via the Internet to enable mutual communication.

The user command receiver 140 transfers user commands received from a remote controller to the controller 150. The controller 150 controls the entire operation of the DTV 100 in response to user commands received from the user command receiver 140.

Specifically, the controller 150 stores the EPG information containing the additional data separated from the broadcast signal by the broadcast signal separator 121 in the storage unit 180. If the DTV 100 is connected to the PC 200 through the Internet interface 170, the controller 150 may transmit the EPG information stored in the storage unit 180 to the PC 200 through the Internet interface 170.

If information regarding a broadcast program scheduled for viewing and recording is received through the Internet interface 170, the controller 150 may control the broadcast receiver 110, broadcast processor 120, broadcast output unit 130 and storage unit 180 to perform scheduled viewing and scheduled recording of the broadcast program.

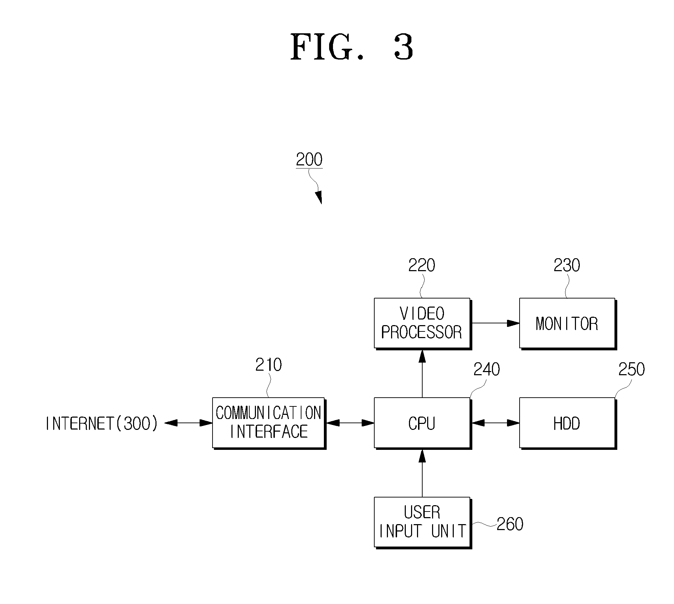

Hereinafter, the PC 200 of FIG. 1 will be described in detail with reference to FIG. 3. FIG. 3 is a detailed block diagram showing the PC 200 shown in FIG. 1.

In FIG. 3, the PC 200 comprises a communication interface 210, a video processor 220, a monitor 230, a central processing unit (CPU) 240, a hard disc drive (HDD) 250 and a user input unit 260.

The communication interface 210 is connected so as to be in communication with the DTV 100 via the Internet 300.

The video processor 220 converts video to be displayed on a screen to a video signal having a format suitable for the monitor 230. The monitor 230 displays video corresponding to the video signal received from the video processor 220.

The HDD 250 is a storage medium which stores a program and data required to operate the PC 200. The CPU 240 controls the entire operation of the PC 200 in response to the user commands input through the user input unit 260.

The CPU 240 processes the EPG information received from the DTV 100 through the communication interface 210, and transfers the processed EPG information to the video processor 220, so that the EPG information may be displayed on the monitor 230.

The user may select a broadcast program which he or she desires to record through the user input unit 260, referring to the EPG information displayed on the monitor 230. Accordingly, the CPU 240 may transmit information regarding the broadcast program selected by the user to the DTV 100 through the communication interface 210.

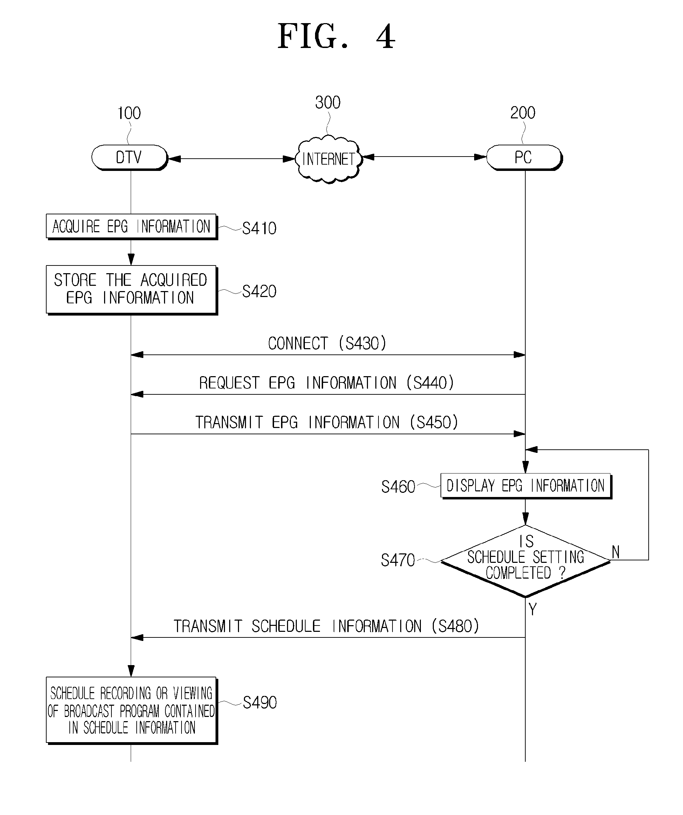

A process by which the DTV 100 schedules recording or viewing of the broadcast program selected by a user through the PC 200 will be described in detail with reference to FIG. 4. FIG. 4 is a diagram explaining a broadcast scheduling method according to an exemplary embodiment of the present invention.

As shown in FIG. 4, the controller 150 of the DTV 100 acquires the EPG information (S410). In more detail, the controller 150 may acquire the EPG information by extracting the EPG information from the additional data separated from the broadcast signal by the broadcast signal separator 121.

The controller 150 then stores the EPG information acquired in operation S410 in the storage unit 180 (S420).

Next, if the PC 200 is connected to the DTV 100 via the Internet 300, the controller 150 of the DTV 100 may be connected to the CPU 240 of the PC 200, enabling communication between the DTV 100 and the CPU 240 (S430). This mutual communication may comply with the HyperText Transfer Protocol (HTTP), as the DTV 100 and PC 200 are connected via the Internet 300.

If the CPU 240 of the PC 200 requests the EPG information from the DTV 100 through the communication interface 210 (S440), the controller 150 of the DTV 100 may transmit the EPG information stored in the storage unit 180 to the PC 200 through the Internet interface 170 (S450).

The CPU 240 of the PC 200 then displays the EPG information received from the DTV 100 through the communication interface 210 (S460). Specifically, the CPU 240 may process the received EPG information and transfer the processed EPG information to the video processor 220 so that the EPG information may be displayed on the monitor 230.

Accordingly, the user may refer to the EPG information displayed on the monitor 230, and may also schedule a broadcast program to be recorded or viewed through the user input unit 260. In more detail, the user may select one broadcast program from among the broadcast programs arranged in the EPG information, and may set the type of schedules for the selected broadcast program, so that scheduling may be set. The type of schedules comprise a viewing schedule and a recording schedule, which were described above, so detailed description thereof is omitted.

If the user completes setting the recording or viewing schedule (S470-Y), the CPU 240 of the PC 200 may transmit schedule information to the DTV 100 through the communication interface 210 (S480). In operation S480, the schedule information transmitted from the PC 200 to the DTV 100 comprises information regarding the broadcast program selected by the user and regarding the type of schedule.

The controller 150 of the DTV 100 controls the broadcast receiver 110, broadcast processor 120, broadcast output unit 130 and storage unit 180 to perform scheduled viewing and scheduled recording of the broadcast program contained in the schedule information received from the PC 200 through the Internet interface 170 (S490).

Specifically, if scheduled viewing is set, the controller 150 may control the broadcast receiver 110, broadcast processor 120 and broadcast output unit 130 so that the user may directly view the scheduled broadcast program at the time when the broadcast of the scheduled broadcast program begins. If scheduled recording is set, the controller 150 may control the broadcast receiver 110, broadcast processor 120 and storage unit 180 to store the scheduled broadcast program.

The process by which the DTV 100 schedules recording or viewing of the broadcast program which the user desires to schedule through the PC 200 was explained above in detail, in accordance with the exemplary embodiment of the present invention.

In this exemplary embodiment of the present invention, used for illustrative purposes only, since the DTV 100 and PC 200 are connected through the Internet 300 to achieve mutual communication, the EPG information and schedule information are transferred between the DTV 100 and PC 200 via the Internet 300. However, the DTV 100 and PC 200 may be connected using networks other than the Internet 300, and the EPG information and schedule information may also be transferred between the DTV 100 and PC 200 via these other networks. Besides the Internet 300, such networks may comprise an LAN, a PAN, a PSTN or any other suitable communication network. Wireless networks may also be employed in addition to wired networks.

Additionally, only one broadcast program is selected and scheduled to be recorded or viewed in this exemplary embodiment of the present invention, but several broadcast programs may be selected and scheduled to be recorded or viewed.

Furthermore, the EPG information is used as broadcast information and comprises the additional data contained in the broadcast signal in this exemplary embodiment of the present invention. Accordingly, the EPG information may be received together with a broadcast through the same medium to which the broadcast is transferred.

However, the EPG information is not always received together with the broadcast in order to implement the present invention, so the EPG information may be received separately from the broadcast through the same medium to which the broadcast is transferred. The medium to which the broadcast is transferred may be radio, a cable, a network, an Internet, a satellite, or other media, but is not limited thereto.

In addition, the present invention is also applicable to a situation in which the EPG information is received through another medium instead of the medium to which the broadcast is transferred. For example, a broadcast may be transferred via the radio or satellite, and EPG information may be transferred through the cable or the network or the Internet.

In order to facilitate understanding of the present invention, the EPG information is assumed as information transmitted from the DTV 100 to the PC 200 in the exemplary embodiment of the present invention. However, other broadcast information may be used instead of the EPG information.

The broadcast information transmitted from the DTV 100 to the PC 200 may be provided from a broadcast provider or broadcast information provider, or other providers to the DTV 100.

Although the schedule information comprises the information regarding the broadcast program and regarding the type of schedules, the present invention may also be applied to a situation in which the schedule information comprises different types of information, for example a time slot in which a program is scheduled to be viewed and/or recorded.

Additionally, although the DTV 100 transmits the EPG information received from outside to the PC 200 without change, the DTV 100 may edit the EPG information received from outside according to the user's edit instructions, may store the edited EPG information, and may then transmit the EPG information to the PC 200. For example, when the original EPG information received from outside by the DTV 100 pertains to broadcast programs provided through "channel 1-100", if the EPG information is edited according to the user's edit instructions, the edited EPG information may concern broadcast programs provided through "channel 1-10" and "channel 31-50".

Although a broadcast program scheduling apparatus to which the present invention is applicable is constituted by the DTV 100 in order to facilitate understanding of the present invention, the present invention is applicable to other broadcast receiving apparatuses instead of the DTV 100. Besides the DTV 100, broadcast receiving apparatuses may be implemented as a set-top box (STB) and a digital multimedia broadcasting (DMB), or may be implemented as any of various portable devices, such as a mobile phone, a navigation device and a personal multimedia player (PMP), having a broadcast receiving function.

Additionally, the PC 200 is assumed to be an apparatus for setting a schedule based on the EPG information in the exemplary embodiment of the present invention, but the present invention is not limited thereto. Accordingly, other terminal devices may also be used instead of the PC 200. Besides the PC 200, terminal devices may comprise a mobile phone, and the mobile phone may be connected to the Internet through a base station. Additionally, a network terminal device may be used to connect to a network, such as the Internet, so as to communicate with the DTV 100. The network terminal device is capable of being connected to the network using either wired or wireless technology. If the wireless technology is used, the network terminal device may be connected to the network through an access point (AP).

In this exemplary embodiment of the present invention, it is desirable that the DTV 100 and the PC 200 are in the possession of the same user. However, different users may have possession of the DTV 100 and the PC 200.

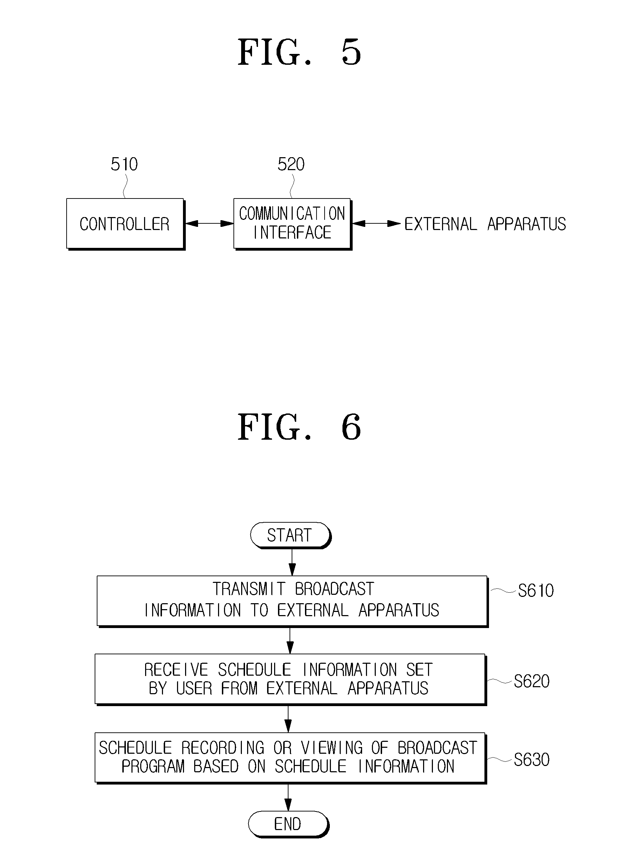

Hereinafter, another exemplary embodiment of the present invention will be described in detail with reference to FIGS. 5 and 6.

A broadcast receiving apparatus according to the exemplary embodiment of the present invention shown in FIG. 5 comprises a controller 510 and a communication interface 520.

The communication interface 520 communicably connected to an external apparatus. The controller 510 transmits broadcast information to the external apparatus through the communication interface 520. The controller 510 then receives schedule information from the external apparatus through the communication interface 520. Additionally, the controller 510 schedules recording or viewing of a broadcast program contained in the schedule information.

Referring to a broadcast scheduling method shown in FIG. 6, the broadcast receiving apparatus transmits the broadcast information to the external apparatus (S610). The broadcast receiving apparatus then receives the schedule information from the external apparatus (S620). Thereafter, the broadcast receiving apparatus schedules recording or viewing of a broadcast program contained in the schedule information (S630).

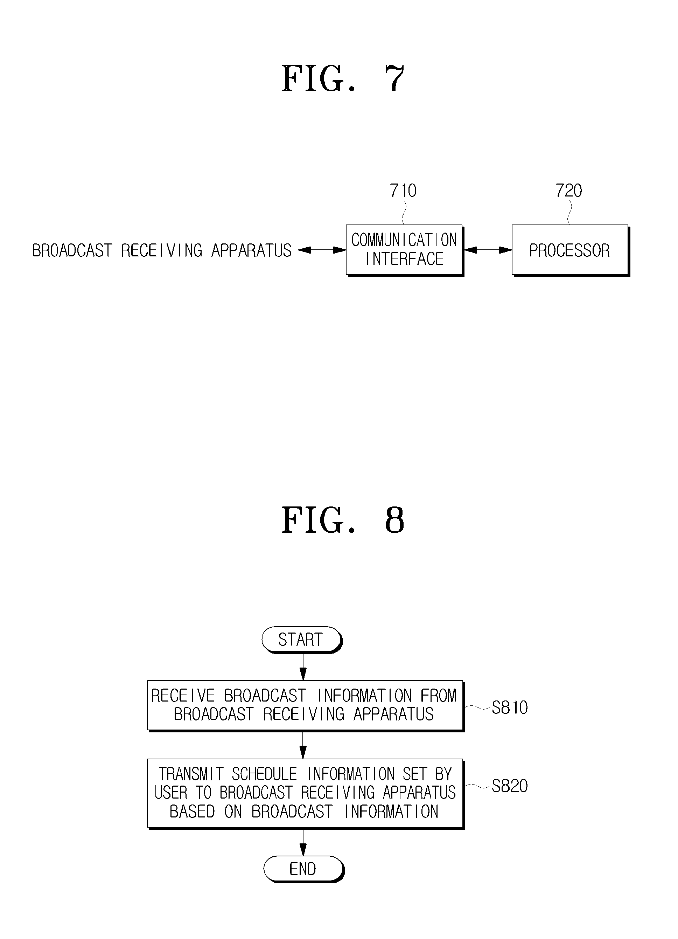

Hereinafter, another exemplary embodiment of the present invention will be described in detail with reference to FIGS. 7 and 8.

A terminal device according to the exemplary embodiment of the present invention shown in FIG. 7 comprises a communication interface 710 and a processor 720.

The communication interface 710 is connected to the broadcast receiving apparatus enabling communication with the broadcast receiving apparatus. The processor 720 receives the broadcast information from the broadcast receiving apparatus through the communication interface 710. In order that a broadcast program selected based on the broadcast information is scheduled to be recorded or viewed in the broadcast receiving apparatus, the processor 720 transmits schedule information containing information regarding the selected broadcast program to the broadcast receiving apparatus through the communication interface 710.

Referring to a broadcast scheduling method shown in FIG. 8, the terminal device receives the broadcast information from the broadcast receiving apparatus (S810). In order that a broadcast program selected based on the broadcast information is scheduled to be recorded or viewed in the broadcast receiving apparatus, the terminal device transmits schedule information containing information regarding the selected broadcast program to broadcast receiving apparatus (S820).

Therefore, if the user selects a broadcast program which the user desires to record through the terminal device, the broadcast receiving apparatus may schedule the desired broadcast program.

According to the exemplary embodiments of the present invention as described above, a user may set scheduling for a desired broadcast program. Accordingly, the user may also set scheduling for the desired broadcast program even when there is no local broadcast receiving apparatus. Additionally, when scheduling the broadcast program to be recorded or viewed, the user may refer to broadcast information transmitted from an external apparatus and stored in the broadcast receiving apparatus. Therefore, the user can schedule recording or viewing of the broadcast program based on broadcast information edited into familiar format.

The foregoing exemplary embodiments and advantages are merely exemplary and are not to be construed as limiting the present invention. The present teaching can be readily applied to other types of apparatuses.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast scheduling method of a broadcast receiving apparatus, the method comprising:
transmitting broadcast information to an external apparatus (S610);
receiving schedule information from the external apparatus (S620); and
scheduling recording or viewing of a broadcast program based on the schedule information (S630).

2. The method as claimed in claim 1, wherein the scheduling comprises scheduling recording or viewing of a broadcast program contained in the schedule information (S490).

3. The method as claimed in claim 1 or 2, wherein the broadcast information comprises information received from one of a broadcast provider and a broadcast information provider and stored by the broadcast receiving apparatus.

4. The method as claimed in claim 1, 2 or 3, wherein the broadcast information comprises information received from one of a broadcast provider and a broadcast information provider, edited according to user edit instructions and stored by the broadcast receiving apparatus.

5. The method as claimed in claim 1, 2, 3 or 4, wherein the broadcast information comprises information received together with a broadcast by a medium through which the broadcast is transferred, and then stored by the broadcast receiving apparatus.

6. The method as claimed in claim 5, wherein the medium through which the broadcast is transferred is one of radio waves, a cable, a network, an Internet and a satellite.

7. The method as claimed in claim 1, 2, 3 or 4, wherein the broadcast information comprises information received through a medium, which differs from the medium to which the broadcast is transferred, and stored by the broadcast receiving apparatus.

8. The method as claimed in any preceding claim, wherein the scheduling comprises performing at least one of scheduled viewing and scheduled recording of the broadcast program.

9. The method as claimed in any preceding claim, wherein the transmitting comprises transmitting the broadcast information to the external apparatus via one network selected from among an Internet, a public switched telephone network, a local area network, a personal area network and a wireless network (S450), and
the receiving comprises receiving the schedule information from the external apparatus via the selected network.

10. The method as claimed in any preceding claim, wherein the external apparatus is one of a personal computer, a mobile phone and a network connection apparatus.

11. The method as claimed in any preceding claim, wherein the broadcast receiving apparatus and the external apparatus are in the possession of the same user.

12. The method as claimed in any preceding claim, wherein the broadcast receiving apparatus and the external apparatus are communicably connected via the Internet, and
the broadcast receiving apparatus functions as a web server for the external apparatus.

13. A broadcast receiving apparatus comprising:
a communication interface (520) which is communicably connected to an external apparatus; and
a controller (150), (510)which transmits broadcast information to the external apparatus through the communication interface (520), receives schedule information from the external apparatus through the communication interface (520), and schedules recording or viewing of a broadcast program based on the schedule information.

14. The broadcast receiving apparatus as claimed in claim 13, wherein the controller (150, 510) schedules recording or viewing of a broadcast program contained in the schedule information.

15. The broadcast receiving apparatus as claimed in claim 13 or 14, further comprising a storage unit (180) in which broadcast information, received from one of a broadcast provider and a broadcast information provider, is stored,
wherein the controller (150, 510) transmits the broadcast information stored in the storage unit (180) to the external apparatus through the communication interface.

16. The broadcast receiving apparatus as claimed in claim 13, 14 or 15, further comprising a storage unit (180) in which broadcast information is stored,
wherein the controller (150, 510) edits broadcast information received from one of a broadcast provider and a broadcast information provider according to user edit instructions, stores the edited broadcast information in the storage unit (180), and transmits the stored broadcast information to the external apparatus through the communication interface (520).

17. The broadcast receiving apparatus as claimed in any one of claims 13-16, wherein the broadcast information comprises information received together with a broadcast by a medium to which the broadcast is transferred, and then stored.

18. The broadcast receiving apparatus as claimed in claim 17, wherein the medium through which the broadcast is transferred is one of radio waves, a cable, a network,the Internet and a satellite.

19. The broadcast receiving apparatus as claimed in any one of claims 13-16, wherein the broadcast information comprises information received through a medium, which differs from the medium through which the broadcast is transferred, and stored by the broadcast receiving apparatus.

20. The broadcast receiving apparatus as claimed in any one of claims 13-19, wherein the controller performs at least one of scheduled viewing and scheduled recording of the broadcast program.

21. The broadcast receiving apparatus as claimed in any one of claims 13-20, wherein the broadcast receiving apparatus and the external apparatus are communicably connected via the Internet (300), and
the broadcast receiving apparatus functions as a web server for the external apparatus.

22. A broadcast scheduling method comprising:
receiving broadcast information from a broadcast receiving apparatus (S810); and
transmitting schedule information to the broadcast receiving apparatus based on the broadcast information (S820).

23. The method as claimed in claim 22, wherein the schedule information comprises information regarding a selected broadcast program.

24. A terminal device comprising:
a communication interface (710) which is communicably connected to a broadcast receiving apparatus; and
a processor (720) which receives broadcast information from the broadcast receiving apparatus through the communication interface (710) and transmits schedule information to the broadcast receiving apparatus through the communication interface (710) based on the broadcast information.

25. The terminal device as claimed in claim 24, wherein the schedule information comprises information regarding a broadcast program selected by the user.
